# EUROPEAN PATENT APPLICATION

(11) **EP 4 804 252 A1**
(43) Date of publication of application: **09.09.2026**
(21) Application number: 25869570.9
(22) Date of filing: 17.12.2025
(51) Int. Cl.: H01M 4/36

(54) **NEGATIVE ELECTRODE ACTIVE MATERIAL AND PREPARATION METHOD THEREFOR, ELECTRODE, AND BATTERY**

(30) Priority: 24.01.2025 CN 202510121827
(71) Applicant: Berzelius Co., Ltd., (Jiangning Development Zone) (CN); Berzelius (Hefei) Co., Ltd., Hefei, Anhui 231582 (CN)
(72) Inventor: LUO, Shu, Nanjing, Jiangsu 211100 (CN); ZHA, Daosong, Nanjing, Jiangsu 211100 (CN); LI, Zhe, Nanjing, Jiangsu 211100 (CN); ZHANG, Hebao, Nanjing, Jiangsu 211100 (CN); ZHAO, Shuangyu, Nanjing, Jiangsu 211100 (CN); LU, Yuting, Nanjing, Jiangsu 211100 (CN); DOU, Zhengyu, Nanjing, Jiangsu 211100 (CN); WANG, Haonan, Nanjing, Jiangsu 211100 (CN); WANG, Cen, Nanjing, Jiangsu 211100 (CN)
(74) Representative: Becker Kurig & Partner Patentanwälte mbB
(86) International application number: PCT/CN2025/143254
(87) International publication number: WO 2026/157685

(57) **Abstract**

The present application provides an anode active material, a method for preparing the same, an electrode and a battery. The anode active material particles comprise a porous carbon framework, nano grains of pure silicon and an amorphous carbon film. The anode active material particles comprise silicon-deficient particles, a mass content of silicon in the silicon-deficient particles is at most 15%, and a quantity percentage D_{lack} of the silicon-deficient particles in the anode active material particles is at most 35%, and a product DS of a total silicon mass content Wₜₒₜₐₗ in the anode active material multiplied by the quantity percentage D_{lack} of the silicon-deficient particles is at most 0.15. The percentage of the silicon-deficient particles in the provided anode active material is controlled, thereby improving the deposition uniformity of the nano grains of pure silicon in the anode active material, avoiding the presence of a large number of ineffective porous carbon particles, and also preventing severe enrichment of the nano grains of pure silicon in some particles. Therefore, the Coulombic efficiency and cycling stability of the material are enhanced, and the expansion rate is reduced.

## Description

### Technical Field

The present application relates to the field of batteries and , in particular, to an anode active material for secondary batteries, a method for preparing the same, an electrode, and a battery.

### Background

With the rapid development of electric vehicles, portable electronic devices and other fields, higher requirements are put forward for the energy density of batteries. Conventional graphite anode materials can no longer meet the ever-increasing demand for energy density. Therefore, the development of novel high-capacity anode materials becomes a research hotspot. Silicon-based materials have an extremely high theoretical specific capacity and are therefore regarded as ideal candidates for next-generation high-energy-density battery anode materials. However, silicon-based materials have issues of severe volume expansion and contraction during battery cycling, leading to the degradation of battery performance. By introducing a porous structure, porous silicon-carbon anode materials effectively alleviate the volume expansion issue of silicon-based materials and improve the cycling stability of batteries. Thereby, such materials become a promising candidate for enhancing the energy density of batteries.

Porous silicon-carbon anode materials can be prepared by various methods such as sand milling, templating, and chemical vapor deposition (CVD). The core of chemical vapor deposition is to introduce a silicon source gas (such as silane) into the pores of porous carbon particles, and deposit the gas by high-temperature pyrolysis to form silicon nanoparticles dispersed in the pores of the porous carbon. Molecular-scale control of the fabricated nanomaterials can be achieved by this method, and the deposited silicon-carbon materials exhibit a relatively uniform composition and a relatively dense structure. Accordingly, this structure effectively alleviates the volume change of silicon-based materials during charge and discharge, enhancing the cycling stability and rate capability of the material.

During the vapor-phase silicon-carbon deposition process, the silicon source gas needs to be uniformly deposited inside the porous carbon to form a uniformly distributed silicon-carbon composite material. However, uniform deposition is challenging due to differences in the pore structure and surface properties of porous carbon, as well as mass transfer and heat transfer limitations during the deposition process. In practice, in conventional rotary kiln and fluidized bed processes, it is difficult to fully fluidize or disperse porous carbon particles, resulting in insufficient contact between some particles and the silicon source gas. Therefore, such particles become silicon-deficient particles, i.e., particles with little to no silicon deposited inside. These silicon-deficient particles still retain abundant pore structures and have a high specific surface area, while exhibiting poor mechanical properties. These particles are prone to rupture under compression, further exposing abundant internal pores. This drastically increases side reactions with the electrolyte and reduces the coulombic efficiency, cycling performance and rate capability of the battery.

In addition to the presence of silicon-deficient particles, key parameters, including the distribution state of silicon inside and on the surface of porous carbon particles, the uniformity of silicon distribution among different particles, the utilization of internal pore volume of porous carbon particles by silicon, and the remaining pore volume, all significantly affect the cycling stability and volume expansion rate of the material in batteries. Therefore, strengthening the research on the deposition mechanism, optimizing and controlling the process parameters, realizing uniform deposition, minimizing the percentage of silicon-deficient particles, and optimizing the distribution of silicon in the porous carbon structure become urgent key issues to be solved in the industry.

The content in the Background section only represents the technology known by the inventors and does not necessarily constitute prior art in the field.

### Summary

To address at least one of the above technical problems, the present application provides an anode active material for secondary batteries, a method for preparing the same, an electrode, and a battery.

The anode active material of the present application comprises anode active material particles. The anode active material particles comprise a porous carbon framework, nano grains of pure silicon, and an amorphous carbon film.

The anode active material particles comprise silicon-deficient particles, a mass content of silicon in the silicon-deficient particles is at most 15%, and a quantity percentage D_{lack}of the silicon-deficient particles in the anode active material particles is at most 35%, preferably at most 30%, more preferably at most 25%, and even more preferably at most 20%.

A product DS of a total silicon mass content Wₜₒₜₐₗ in the anode active material multiplied by the quantity percentage D_{lack} of the silicon-deficient particles is at most 0.15, preferably at most 0.125, and more preferably at most 0.1.

In some embodiments of the present application, the nano grains of pure silicon are deposited in pores of the porous carbon framework and/or on the surface of the porous carbon framework.

In some embodiments of the present application, the amorphous carbon film coats the surface of the nano grains of pure silicon and/or the porous carbon framework, and/or the amorphous carbon film fills in the pores of the porous carbon framework.

In some embodiments of the present application, a powder resistivity of the anode active material particles is at most 60 Ω•cm, preferably at most 40 Ω•cm, more preferably at most 20 Ω•cm, and even more preferably at most 10 Ω•cm.

In some embodiments of the present application, a specific surface area of the anode active material particles is at most 60 m²/g, preferably at most 35m²/g, more preferably at most 20 m²/g, and even more preferably at most 10 m²/g.

In some embodiments of the present application, a median particle size of the anode active material particles ranges from 1 µm to 15 µm, preferably 2 µm to 12 µm.

In some embodiments of the present application, the total silicon mass content Wₜₒₜₐₗ in the anode active material ranges from 30wt% to 80wt%, preferably from 35wt% to 65wt%.

In some embodiments of the present application, a median particle size of the nano grains of pure silicon are at most 10 nm, preferably at most 5 nm, and more preferably at most 3 nm.

The electrode of the present application comprises the anode active material according to any one of the above solutions.

The battery of the present application comprises the electrode as described above.

The method for preparing an anode active material of the present application is provided. The anode active material comprises anode active material particles. The method includes:

Preparing the anode active material particles, which includes:
providing a porous carbon framework;
depositing nano grains of pure silicon on the porous carbon framework; and
coating an amorphous carbon film on the porous carbon framework with the nano grains of pure silicon deposited thereon.

The anode active material particles comprise silicon-deficient particles, a mass content of silicon in the silicon-deficient particles is at most 15%, and a quantity percentage D_{lack} of the silicon-deficient particles in the anode active material particles is at most 35%, preferably at most 30%, more preferably at most 25%, and even more preferably at most 20%.

A product DS of a total silicon mass content Wₜₒₜₐₗ in the anode active material multiplied by the quantity percentage D_{lack} of the silicon-deficient particles is at most 0.15, preferably at most 0.125, and more preferably at most 0.1.

By controlling the quantity percentage of silicon-deficient particles in the provided anode active material, the deposition uniformity of nano grains of pure silicon in the anode active material is improved, the presence of a large number of ineffective porous carbon particles is avoided, and severe enrichment of nano grains of pure silicon in some particles is also prevented. Therefore, the material has a denser and more uniformly distributed structure, the specific surface area of the material is reduced, the mechanical strength and compression resistance of the material are improved, the volume change of the silicon-based material during charge and discharge is effectively alleviated, the Coulombic efficiency and cycling stability of the material are enhanced, and the expansion rate is reduced.

Additional aspects and advantages of the present application will be set forth in part in the following description, and in part will become apparent from the following description, or may be learned by practice of the present application.

### Brief Description of the Drawings

Embodiments of the present application are described in detail below with reference to the accompanying drawings. Here, the accompanying drawings, which form a part of the present application, are used for providing a further understanding of the present application. The illustrative embodiments of the present application and their descriptions are used to explain the present application and do not constitute an improper limitation thereof.
FIG. 1 is a flow chart showing a preparation process of anode active material particles of an anode active material according to an exemplary embodiment of the present application.
FIG. 2 is an X-ray diffraction pattern of the anode active material prepared in Example 1 of the present application.
FIG. 3 shows a scanning electron microscope image at 20 kV and partial results of energy-dispersive spectroscopy point scanning of the anode active material prepared in Example 1 of the present application.

### Detailed Description of Embodiments

In the following, only some exemplary embodiments are briefly described. As those skilled in the art will realize, the described embodiments may be modified in various different ways, all without departing from the spirit or scope of the present application. Accordingly, the drawings and description are to be regarded as illustrative in nature and not restrictive.

The following disclosure provides many different embodiments or examples for implementing different structures of the present application. To simplify the present disclosure, components and configurations in specific examples are described below. They are, of course, merely examples and are not intended to limit the present application. In addition, the present application may repeat reference numerals and/or reference letters in different instances. This repetition is for the purpose of simplicity and clarity and does not in itself indicate a relationship between the various embodiments and/or configurations discussed. Moreover, the present application provides examples of various specific processes and materials, but one of ordinary skill in the art will recognize the application of other processes and/or the use of other materials.

Specific implementations of the present application are described in more detail below with reference to the accompanying drawings and embodiments, so that the solutions of the present application and their advantages may be better understood. However, the specific implementations and embodiments described below are for illustrative purposes only and are not intended to limit the present application.

### Anode Active Material

The anode active material provided by the present application comprises anode active material particles. The anode active material particles comprise a porous carbon framework, nano grains of pure silicon, and an amorphous carbon film.

The porous carbon framework has a large number of pores. Optionally, the nano grains of pure silicon are deposited in the pores of the porous carbon framework and/or on the surface of the porous carbon framework. For example, the nano grains of pure silicon are deposited on the bottom surface of the pores of the porous carbon framework, or the nano grains of pure silicon are deposited on walls of the pores of the porous carbon framework, or the nano grains of pure silicon are deposited on the surface of the porous carbon framework.

Optionally, the amorphous carbon film coats the surfaces of the nano grains of pure silicon and/or the surface of the porous carbon framework, and/or the amorphous carbon film fills in the pores of the porous carbon framework. For example, the amorphous carbon film coats the surfaces of the nano grains of pure silicon, or the amorphous carbon film coats the surface of the porous carbon framework, or the amorphous carbon film coats the bottom surface of the pores of the porous carbon framework, or the amorphous carbon film coats side walls of the pores of the porous carbon framework.

The anode active material particles contain silicon-deficient particles. In the present application, anode active material particles with a mass content of silicon being at most 15% are referred to as silicon-deficient particles. Optionally, the mass content of silicon in the anode active material particles (also referred to as porous carbon particles in the present application) is measured by scanning electron microscopy at 20 kV.

For example, point scanning is performed on the particles at 20 kV by using the energy-dispersive X-ray spectroscopy (EDS) function of a Hitachi SU8010 scanning electron microscope (SEM), so as to obtain information on the types and contents of elements in the particles. For statistical analysis of the uniformity of the silicon-carbon anode active material, an EDS sample is prepared by spreading sample particles flat on a conductive carbon adhesive, so as to ensure that only one layer of particles is present on the conductive carbon adhesive and avoid stacking of multiple layers of particles. During collection of EDS signals of the particles, point scanning is performed on all particles with a diameter of at least 2 µm appearing in the image at a magnification of 1000× to collect EDS signals of all particles, ensuring that the number of collected particles is at least 500 (if fewer than 500 particles are present in one image, EDS signals of particles in multiple regions are collected). Statistical analysis is performed on the energy spectrum signals of the collected particles. Particles with a mass content of being at most 15% are defined as silicon-deficient particles, and the quantity percentageD_{lack} of silicon-deficient particles is statistically calculated.

Optionally, in the present application, the quantity percentageD_{lack} of the silicon-deficient particles in the anode active material particles is at most 35%, preferably at most 30%, more preferably at most 25%, and even more preferably at most 20%.

During the vapor-phase silicon-carbon deposition process, the silicon source gas is first adsorbed by the porous carbon framework, then decomposed at a high temperature to form nano grains of pure silicon, and subsequently deposited. Uniform deposition is challenging due to differences in the pore structure and surface properties of the porous carbon framework particles, as well as mass transfer and heat transfer limitations during deposition. In practice, in conventional rotary kiln and fluidized bed processes, it is difficult to fully fluidize or disperse the porous carbon framework, resulting in insufficient contact between some particles and the silicon source gas and forming "dead zones" of fluidization or dispersion. Therefore, such particles become silicon-deficient particles, i.e., particles with little to no silicon deposited inside. Restricted by differences in pore structure and surface properties, some porous carbon framework particles exhibit poor kinetics during the silicon deposition reaction, with significantly slower adsorption and decomposition reactions than other particles. This also causes such particles to become silicon-deficient particles. These silicon-deficient particles still retain abundant pore structures and has a high specific surface area, while exhibiting poor mechanical properties. The particles are prone to rupture under compression, further exposing abundant internal pores. This drastically increases side reactions with the electrolyte and reduces the Coulombic efficiency, cycling performance and rate capability of batteries. In the present application, controlling the quantity percentage D_{lack} of the silicon-deficient particles in the anode active material particles to at most 35%, preferably at most 30%, more preferably at most 25%, and even more preferably at most 20%, can effectively improve the distribution uniformity of the nano grains of pure silicon in the anode active material, reduce the specific surface area of the material, enhance the mechanical strength and compression resistance, effectively alleviate the volume change of the silicon-based material during charge and discharge, and improve the Coulombic efficiency and cycling stability of the material.

Further, in the present application, the product DS of the total silicon mass content Wₜₒₜₐₗ in the anode active material multiplied by the quantity percentage D_{lack} of silicon-deficient particles is at most 0.15, preferably at most 0.125, more preferably at most 0.1.

Due to structural constraints of the internal pore volume and pore size distribution of the porous carbon framework, there is an upper limit to the mass content of silicon that can be accommodated inside the porous carbon framework. When the mass content of silicon in actual deposits is lower than the upper limit of silicon that can be accommodated in the porous carbon framework, the porous carbon framework still retains residual pore structures. Such residual pore structures may be partially filled during the subsequent amorphous carbon coating process, or may remain in the final product. Such residual pore structures advantageously improve the ability of the silicon-carbon material to accommodate and buffer the expansion and contraction of silicon nanoparticles in the battery, thereby effectively mitigating volume changes of the silicon-carbon material during charge and discharge, enhancing cycling stability, and reducing volume expansion. Conversely, when the mass content of silicon in the actual deposits is higher than the upper limit of silicon that can be accommodated in the porous carbon particles, excess silicon will form an elemental silicon layer with a certain thickness on the particle surface or form elemental silicon particles, leading to severely aggravated side reactions with the electrolyte, significantly deteriorated cycling performance, and markedly increased volume expansion.

When DS is at most 0.15 (preferably at most 0.125, and more preferably at most 0.1), the presence of a large number of ineffective porous carbon particles can be effectively avoided, and severe enrichment of nano grains of pure silicon in some particles can also be prevented.

Optionally, the powder resistivity of the anode active material particles is at most 60 Ω•cm, preferably at most 40 Ω•cm, more preferably at most 20 Ω•cm, and even more preferably at most 10 Ω•cm.

As described above, when the mass content of silicon in the actual deposits on the porous carbon particles is higher than the upper limit of silicon that can be accommodated in the porous carbon particles, excess silicon will form an elemental silicon layer with a certain thickness on the particle surface, resulting in a significant increase in the powder resistivity of the material. When the powder resistivity of the anode active material particles is controlled to be at most 60 Ω•cm, preferably at most 40 Ω•cm, more preferably at most 20 Ω•cm, and even more preferably at most 10 Ω•cm, it indicates that the elemental silicon layer on the particle surface is thin or absent, thereby significantly improving cycling performance.

Optionally, the specific surface area BET of the anode active material particles is at most 60m²/g, preferably at most 35m²/g, more preferably at most 20m²/g, and even more preferably at most 10m²/g.

Optionally, the median particle size Dᵥ50 of the anode active material particles ranges from 1 µm to 15 µm, preferably 2 µm to 12 µm.

Optionally, the mass content Wₜₒₜₐₗ in the anode active material ranges from 30wt% to 80wt%, preferably from 35wt% to 65wt%. In this case, the material exhibits a high reversible capacity, as well as excellent cycling performance and a low expansion rate.

Optionally, the median particle size of the nano grains of pure silicon is at most 10 nm, preferably at most 5 nm, and more preferably at most 3 nm. Silicon nanoparticles within the ranges undergo small expansion and are less prone to rupture during cycles of lithium ion intercalation and deintercalation, resulting in low cycling expansion and stable cycling for lithium ion secondary batteries using the material. Since the nano grains of pure silicon are mainly deposited in the pores of the porous carbon framework or coated on the pore surfaces of the porous carbon framework, the pore size and distribution structure of the porous carbon framework determine the size of the nano grains of pure silicon particles.

By controlling the quantity percentage of silicon-deficient particles in the provided anode active material, the deposition uniformity of nano grains of pure silicon in the anode active material is improved, the presence of a large number of ineffective porous carbon particles is avoided, and severe enrichment of nano grains of pure silicon in some particles is also prevented. Therefore, the material has a denser and more uniformly distributed structure, the specific surface area of the material is reduced, the mechanical strength and compression resistance of the material are improved, the volume change of the silicon-based material during charge and discharge is effectively alleviated, the Coulombic efficiency and cycling stability of the material are enhanced, and batteries using the anode active material also have higher energy density, more excellent cycle life, and lower expansion rate.

### Method for Preparing Anode Active Material

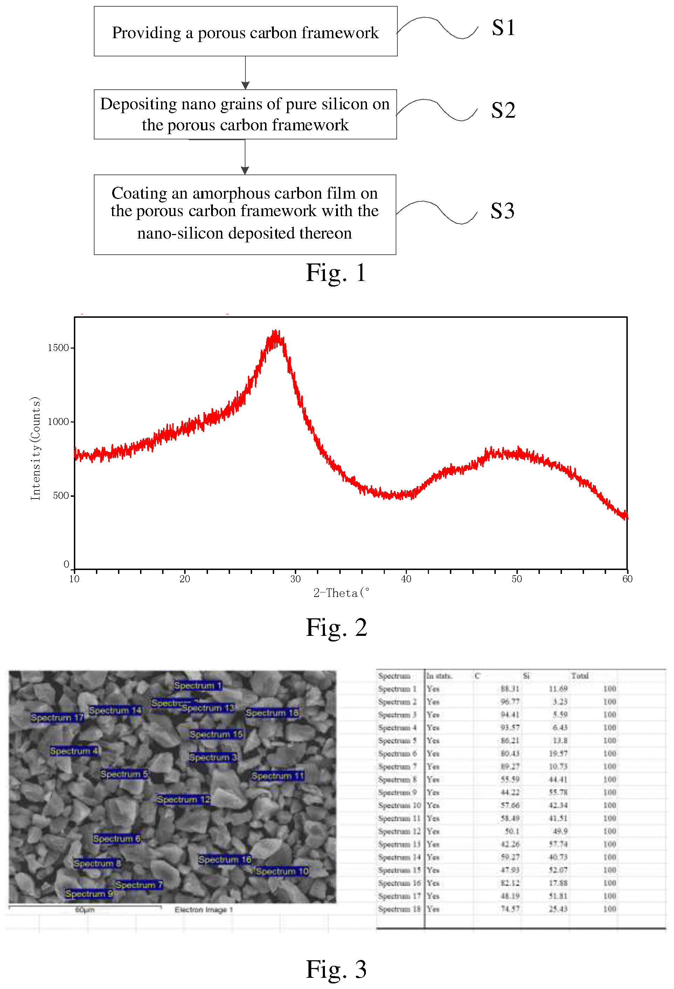

FIG. 1 shows a method for preparing anode active material particles of the anode active material provided in an embodiment of the present application. The method includes the steps of S1 to S3.

S1: providing a porous carbon framework.

The porous carbon framework refers to a carbon material with pore structures of different sizes. According to pore size, the porous carbon framework can be classified into three types: microporous carbon framework (with a pore size less than 2 nm), mesoporous carbon framework (with a pore size between 2 nm and 50 nm), and macroporous carbon framework (with a pore size greater than 50 nm). The porous carbon framework has the characteristics of adjustable pore structure, large specific surface area, good electrical conductivity, and good stability. By adjusting the preparation method and process parameters, porous carbon materials with different pore sizes, pore volumes, and porosities can be obtained.

At present, commonly used porous carbon frameworks include biomass-derived porous carbon, resin-based porous carbon, graphite-based porous carbon, and coal-based porous carbon. There are many preparation methods for porous carbon frameworks, including templating, laser ablation, activation, gel crystallization, salting out, co-precipitation, emulsion liquid membrane method. The activation includes physical activation and chemical activation. Physical activation is implemented by carbonizing a carbon precursor at a high temperature (usually 800°C or above), and then using water vapor or carbon dioxide as an activating agent to react with the carbon precursor to achieve pore formation. Chemical activation is implemented by using a chemical reagent (such as KOH,KHCO₃, NaHCO₃, H₃PO₄ or ZnCl₂) to react with a carbon precursor at a high temperature to achieve pore formation.

In the present application, the specific surface area of the selected porous carbon framework may range from 1000 m²/g to 3000 m²/g, preferably from 1400 m²/g to 3000 m²/g. The pore volume of the selected porous carbon framework may range from 0.5 cm³/g to 1.5cm³/g, preferably from 0.55 cm³/g to 1.4 cm³/g. The average adsorption pore diameter of the selected porous carbon framework may be at most 10 nm, more preferably at most 5 nm, and even more preferably at most 3 nm. The average adsorption pore diameter described here specifically refers to the average adsorption pore diameter measured and calculated by a specific surface area analyzer (BET model). The porous carbon framework may contain micropores, mesopores and macropores simultaneously, and may also include closed pores and through pores simultaneously.

In the present application, the median particle size Dᵥ50 of the selected porous carbon framework may range from 1 µm to 15 µm, preferably from 2 µm to 12 µm. The particle size distribution Span of the selected porous carbon framework may be at most 2, preferably at most 1.6, more preferably at most 1.4.

S2: depositing nano grains of pure silicon on the porous carbon framework.

The porous carbon framework is placed in a reaction furnace, and then a silicon source gas is introduced into the reaction furnace. The silicon source gas is adsorbed into the porous carbon framework and then undergoes a pyrolysis reaction at a high temperature to generate nano grains of pure silicon. The reaction furnace may include a vertical fluidized bed, a horizontal fluidized bed, a stirred fluidized bed, a vibrating fluidized bed, a rotary kiln, a tube furnace, or a vapor deposition furnace. The silicon source gas may include silane (SiH₄), dichlorosilane (SiH₂Cl₂), trichlorosilane (SiHCl₃), and silicon tetrachloride (SiCl₄). During the reaction, silicon-carbon anode active materials with different uniformity in nano grains of pure silicon distribution can be obtained by controlling the reaction temperature, gas flow rate, the concentration of silicon source gas (the ratio of silicon source gas to protective gas), stirring intensity, rotation speed, fluidization intensity, reaction time, and device structure design. The reaction temperature may range from 460°C to 580°C. The protective gas may include nitrogen and argon.

To further optimize the structure and uniformity of the anode active material, a multi-step silicon infiltration method may also be adopted to realize the deposition of nano grains of pure silicon.

S3: coating an amorphous carbon film on the porous carbon framework with the nano grains of pure silicon deposited thereon.

After the deposition of nano grains of pure silicon are completed, the porous carbon framework and nano grains of pure silicon may be coated with an amorphous carbon layer in the original reaction furnace, or the porous carbon material with the nano grains of pure silicon deposited thereon may be transferred to another carbon-coating reaction furnace by means of an inert gas-protected transfer device to perform the coating with the amorphous carbon layer. The carbon-coating reaction furnace may include a fluidized bed, a rotary kiln, a tube furnace or a vapor deposition furnace. The carbon source used in this step may be a hydrocarbon gas, and the decomposition temperature of the hydrocarbon gas may range from 480°C to 750°C. Moreover, a multi-step carbon coating method may also be employed to realize effective coating of the amorphous carbon film layer.

In the present application, the content of silicon-deficient particles in the anode active material particles may be controlled by adjusting the specific process parameters of steps S1-S3, such that the quantity percentage D_{lack} of the silicon-deficient particles in the anode active material particles is at most 35%, and the product DS of the total silicon mass content Wₜₒₜₐₗ in the anode active material multiplied by the quantity percentage D_{lack} of the silicon-deficient particles is at most 0.15. Specifically, by controlling appropriate stirring frequency and gas flow rate, the material can be sufficiently fluidized and deagglomerated, so that the reaction gas can come into full contact with the material particles to realize uniform and efficient adsorption and reaction, without causing channeling and excessive bubbling fluidization. In addition, based on the design of reaction temperature zones, the material undergoes adsorption of silicon-containing reaction gas (such as silane) and deposition reaction of silicon nanoparticles at different temperatures in the reaction furnace. This design advantageously improves the uniformity of the reaction.

### Characterization Method for Anode Active Materials

1. Material detection: The anode active materials prepared in the Examples and Comparative Examples were characterized using the following devices: The particle size distribution of the anode active materials was measured using a BetterSize 2600 laser particle size analyzer (Dandong BetterSize Instruments). The composition and crystal structures of the obtained anode materials were tested using a Rigaku miniFlex600 powder X-ray diffractometer (XRD). The specific surface areas of the anode active materials were measured using a NOVA 4200e specific surface area analyzer (Quantachrome Instruments). The test requirements for specific surface area are as follows: A sample was weighed in a sample tube, and the specific surface area of the sample was measured by the multi-point method in the presence of nitrogen within a relative pressure range of p/p0= 0.05-0.3. The mass content (W_{c}) of carbon in a sample was tested using an ELEMENTRAC CS-i carbon/sulfur analyzer, in which the standard sample had a carbon mass content of 41%. The device was calibrated with the standard sample before testing. The total silicon mass content Wₜₒₜₐₗ in an anode active material was calculated by the following formula: Wₜₒₜₐₗ (silicon mass content) = 1-W_{c}. The electrical resistivity of the anode active materials under different pressures was measured using an ST2722-SD powder low-resistance tester (Suzhou Lattice Electronics). The electrical resistivity at 20 MPa was taken as the powder resistivity of the materials.

The surface morphology of the anode active materials was observed using a Hitachi SU8010 scanning electron microscope (SEM). Moreover, point scanning is performed on the particles at 20 kV using the energy-dispersive X-ray spectroscopy (EDS) function of a scanning electron microscope (SEM), so as to obtain information on the element types and element contents in the particles. For statistical analysis of the uniformity of the silicon-carbon anode active material, an EDS sample is prepared by spreading sample particles flat on a conductive carbon adhesive, so as to ensure that only one layer of particles is present on the carbon adhesive and avoid stacking of multiple layers of particles. During collection of EDS signals of the particles, point scanning is performed on all particles with a diameter of at least 2 µm appearing in the image at a magnification of 1000× to collect EDS signals of all particles, ensuring that the number of collected particles is at least 500 (if fewer than 500 particles are present in one image, EDS signals of particles in multiple regions are collected). Statistical analysis is performed on the collected energy spectrum signals of the particles. Particles with a mass content of being at most 15% are defined as silicon-deficient particles, and the quantity percentage D_{lack} of silicon-deficient particles is statistically calculated.

2. Preparation and testing of Half-cell electrode: 80 parts of the above anode active material, 9.7 parts of conductive carbon black, 0.3 parts of single-walled carbon nanotubes, and 10 parts of a binder were mixed in an aqueous system to form a slurry, followed by coating, drying and rolling to obtain an anode electrode sheet comprising the anode active material of the present application.

The anode electrode sheet comprising the anode active material of the present application was sequentially stacked with a separator, a lithium sheet and a stainless steel gasket, and 200 µL of electrolyte was added dropwise, followed by sealing to obtain a 2016-type lithium-ion half-cell. The capacity and discharge efficiency were tested using a small (micro) current range device manufactured by Wuhan LAND Electronics Co., Ltd. The capacity and first Coulombic efficiency of the pure-material half-cell comprising the anode active material of the present application were measured.

3. Preparation and testing of full-cell electrode: 20 parts of the above anode active material, 74 parts of artificial graphite, 2.5 parts of a conductive additive, and 3.5 parts of a binder were mixed in an aqueous system to form a slurry, followed by coating, drying and rolling to obtain an anode electrode sheet comprising the anode active material of the present application.

Each of the anode electrode sheet prepared in Examples and Comparative Examples was subjected to slitting, vacuum baking, then wound together with a matched ternary cathode sheet and a separator, and assembled into an aluminum-plastic case with a corresponding size. A certain amount of electrolyte was injected, followed by degassing, sealing and formation to obtain a lithium-ion full cell of about 3.2 Ah. The cell was then subjected to 1 C/1 C cycling at 45°C to obtain the capacity retention after 1000 cycles, and the cell expansion rate after 1000 cycles was also tested.

The present invention is illustrated below with reference to specific examples. The values of process conditions adopted in the following Examples and Comparative Examples are all exemplary, and their available value ranges are as shown in the foregoing Summary section. Process parameters not specifically indicated may be performed with reference to conventional techniques. Unless otherwise specified, the reagents and instruments used in the technical solutions provided by the present invention are commercially available from conventional sources. It should be noted that the embodiments in the present application and the features in the embodiments may be combined with each other without conflict.

### Example 1-1

1000 g of biomass-derived activated carbon with a Dᵥ50 of 7 µm, a Span of 1.3, a specific surface area of 2000 m²/g, an average adsorption pore diameter of 2 nm, and a pore volume of 0.72 cm³/g was employed. The above porous carbon raw material was loaded into a vertical fluidized bed with a stirring frequency of 30 Hz and a nitrogen flow rate of 10 L/min. After heating to 540°C at a rate of 5°C/min, silane was introduced at a flow rate of 5 L/min, and the temperature was held at 540°C for 150 min. After the completion of the temperature holding, silane was turned off, and the material was further heated to 640°C. Then, acetylene was introduced at 5 L/min, and after temperature holding for 150 min, acetylene was turned off, and the furnace was cooled naturally.

The mass content of carbon in the anode active material obtained by the above steps was measured to be 57.33% by a carbon-sulfur analyzer. Since the material contained almost only carbon and silicon elements, the total silicon mass content Wₜₒₜₐₗ was 42.67%. The specific surface area of the material was 60m²/g, and the powder resistivity was 51.97 Ω • cm. The XRD pattern of the material is shown in FIG. 2.

The morphology and elements of the material were analyzed by scanning electron microscopy. The electron image and energy spectrums are shown in FIG. 3. Only the energy spectrum results of 18 particles in the region are shown in FIG. 3. It can be seen that 6 of them have a mass content of silicon lower than 15% and are thus silicon-deficient particles. Using the statistical method mentioned above, EDS analysis was performed on more than 500 particles with a diameter of at least 2 µm, and the quantity percentage D_{lack} of silicon-deficient particles was statistically calculated to be 34.8%. Therefore, the product DS of the total silicon mass content Wₜₒₜₐₗ multiplied by the quantity percentage D_{lack} of silicon-deficient particles was 0.148.

The pure-material first Coulombic efficiency (pure FCE) of the anode active material tested in a half-cell was 88.4%. Then, the silicon-carbon anode was mixed with graphite (20% silicon-carbon anode added) and assembled into a 3.2 Ah pouch full cell for cycling test at 45 °C. After 1000 cycles of 1 C/1 C long cycling, the capacity retention was 80.5% and the cell expansion rate was 25.4%.

The results are shown in Table 1.

### Example 1-2

A raw material and a process similar to those in Example 1-1 were adopted, except that the stirring frequency was adjusted to 35 Hz, the flow rate of silane was adjusted to 4 L/min, and the temperature holding time for silicon deposition was adjusted to 188 min.

The mass content of carbon in the anode active material obtained by the above steps was measured to be 57.17% by a carbon-sulfur analyzer, and therefore the mass content of silicon was 42.83%. The specific surface area of the material was 53.8 m²/g, and the powder resistivity was 34.48 Ω • cm. Using the characterization method and statistical method described above, the D_{lack} was determined to be 32.2%. Therefore, the product DS of the total silicon mass content Wₜₒₜₐₗ multiplied by the quantity percentage D_{lack} of silicon-deficient particles was 0.138.

The pure FCE of the anode active material tested in a half-cell was 89.1%. A full cell containing the anode active material was subjected to a cycling test at 45°C. After 1000 cycles, the capacity retention was 81.2% and the cell expansion rate was 23.5%.

The results are shown in Table 1.

### Example 1-3

A process similar to that in Example 1-1 was adopted, except that the raw material was replaced with biomass-derived activated carbon particles with a Dᵥ50 of 8.5 µm and a Span of 1.3. The results are shown in Table 1.

### Example 1-4

A raw material and a process similar to those in Example 1-1 were adopted, except that the flow rate of silane was adjusted to 3 L/min, and the temperature holding time for silicon deposition was adjusted to 260 min. The results are shown in Table 1.

### Example 1-5

A raw material and a process similar to those in Example 1-4 were adopted, except that the temperature holding time for silicon deposition was adjusted to 280 min. The results are shown in Table 1.

### Example 1-6

A raw material and a process similar to those in Example 1-2 were adopted, except that the flow rate of silane was adjusted to 3.5 L/min, and the temperature holding time for silicon deposition was adjusted to 240 min. The results are shown in Table 1.

### Example 1-7

A raw material and a process similar to those in Example 1-6 were adopted, except that the stirring frequency was adjusted to 45 Hz. The results are shown in Table 1.

### Example 1-8

A raw material and a process similar to those in Example 1-7 were adopted, except that the temperature for silicon deposition was adjusted to 510°C, and the stirring frequency was adjusted to 50 Hz. The results are shown in Table 1.

### Example 1-9

A raw material and a process similar to those in Example 1-8 were adopted, except that the temperature holding time for silicon deposition was adjusted to 265 min. The results are shown in Table 1.

### Example 1-10

A raw material and a process similar to those in Example 1-6 were adopted, except that the temperature for silicon deposition was adjusted to 520°C, the nitrogen flow rate of nitrogen was adjusted to 15 L/min, and the stirring frequency was adjusted to 55 Hz. The results are shown in Table 1.

### Example 1-11

1000 g of resin-derived activated carbon with a D 50 of 6.5 µm, a Span of 1.2, a specific surface area of 2050 m²/g, an average adsorption pore diameter of 2 nm, and a pore volume of 0.95 cm³/g was used. The above porous carbon raw material was loaded into a rotary kiln with a stirring frequency of 15 Hz and a nitrogen flow rate of 7 L/min. After heating to 550°C at a rate of 5°C/min, silane was introduced at a flow rate of 3 L/min, and the temperature was held at 550°C for 290 min. After the completion of the temperature holding, silane was turned off, and the material was further heated to 640°C. Then, acetylene was introduced at 3 L/min, and after temperature holding for 250 min, acetylene was turned off, and the furnace was cooled naturally. The results of the obtained material are shown in Table 1.

### Example 1-12

A raw material and a process similar to those in Example 1-11 were adopted, except that the temperature holding time for silicon deposition was adjusted to 250 min. The results are shown in Table 1.

### Example 1-13

A raw material and a process similar to those in Example 1-11 were adopted, except that the stirring frequency was adjusted to 20 Hz, and the temperature holding time for silicon deposition was adjusted to 301 min. The results are shown in Table 1.

### Example 1-14

A raw material and a process similar to those in Example 1-13 were adopted, except that the stirring frequency was adjusted to 17 Hz, the flow rate of silane was adjusted to 1.5 L/min, and the temperature holding time for silicon deposition was adjusted to 602 min. The results are shown in Table 1.

### Example 1-15

The raw materials and process parameters similar to those in Example 1-11 were adopted, except that the equipment was replaced with a horizontal fluidized bed which integrates both the rotating function of a rotary kiln and the powder fluidization function of a fluidized bed. The other process parameters were similar to those in Example 1-11, and the results of the obtained material are shown in Table 1.

### Example 1-16

A raw material and process parameters similar to those in Example 1-15 were adopted, except that the temperature holding time for silicon deposition was adjusted to 235 min. Moreover, the material discharged from the horizontal fluidized bed was reloaded into a rotary kiln, with a stirring frequency of 15 Hz and a nitrogen flow rate of 7 L/min. After heating to 600°C at a rate of 5°C/min, acetylene was introduced at a flow rate of 3 L/min. After the temperature was held at 600°C for 100 min, acetylene was turned off, and the furnace was cooled naturally. The results of the obtained material are shown in Table 1.

### Example 1-17

A raw material and process parameters similar to those in Example 1-15 were adopted, except that the temperature holding time for silicon deposition was adjusted to 326 min. The results of the obtained material are shown in Table 1.

### Example 1-18

A raw material and a process similar to those in Example 1-15 were adopted, except that the flow rate of silane was adjusted to 1.5 L/min, the temperature of silicon deposition was adjusted to 530°C, and the time of silicon deposition was adjusted to 580 min. The results of the obtained material are shown in Table 1.

### Example 1-19

A raw material and a process similar to those in Example 1-18 were adopted, except that the stirring frequency was adjusted to 20 Hz, and the nitrogen flow rate was adjusted to 11 L/min. The results of the obtained material are shown in Table 1.

### Example 1-20

A process similar to that in Example 1-19 was adopted, except that the raw material was replaced with spherical resin-derived carbon with a Dᵥ50 of 6.2 µm, a Span of 1.4, a specific surface area of 1950 m²/g, an average adsorption pore diameter of 2 nm, and a pore volume of 0.80 cm³/g. The results of the obtained material are shown in Table 1.

### Example 1-21

A process and a raw material similar to those in Example 1-20 were adopted, except that the Dᵥ50 of the raw material was adjusted to 8 µm and the Span was adjusted to 1.2. The results of the obtained material are shown in Table 1.

### Example 1-22

1000 g of resin-derived activated carbon with a Dᵥ50 of 9 µm, a Span of 1.1, a specific surface area of 2150 m²/g, an average adsorption pore diameter of 2 nm, and a pore volume of 0.90 cm³/g was used. The above porous carbon raw material was loaded into a vertical fluidized bed, with a stirring frequency of 50 Hz and a nitrogen flow rate of 15 L/min. After heating to 540°C at a rate of 5 °C/min, the system entered the temperature holding stage, and silane was introduced at a flow rate of 5 L/min. After the temperature was held for 100 min, silane was turned off. Then, the nitrogen flow rate was adjusted to 30 L/min and the stirring frequency to 75 Hz, followed by temperature holding for 15 min. Then, the nitrogen flow rate was returned to 15 L/min and the stirring frequency to 50 Hz, and silane was reintroduced at a flow rate of 2 L/min, with temperature holding for 185 min. After the completion of the temperature holding, silane was turned off, and the material was further heated to 640°C. Then, acetylene was introduced at 3 L/min, and after temperature holding for 250 min, acetylene was turned off, and the furnace was cooled naturally. The results of the obtained material are shown in Table 1.

### Example 1-23

A process similar to that in Example 1-22 was adopted and raw materials similar to those in Example 1-21 were adopted. The results of the obtained material are shown in Table 1.

### Comparative Examples 1-1

A process and a raw material similar to those in Example 1-1 were adopted, except that the stirring frequency was adjusted to 20 Hz, and the nitrogen flow rate was adjusted to 5 L/min. The results of the obtained material are shown in Table 1.

### Comparative Examples 1-2

A process and a raw material similar to those in Example 1-2 were adopted, except that the temperature holding time for silicon deposition was adjusted to 210 min. The results of the obtained material are shown in Table 1.

### Comparative Examples 1-3

A process and a raw material similar to those in Example 1-5 were adopted, except that the temperature holding time for silicon deposition was adjusted to 336min. The results of the obtained material are shown in Table 1.

**Table 1**

| | D_{lack} | Wₜₒₜₐₗ | DS | Powder Resistivit y / Ω·cm | BET / m²·g | Pure FCE/ % | Capacity retention at 45°C (after cycling) /% | Volume expansion at 45°C (after cycling) /% |
|---|---|---|---|---|---|---|---|---|
| Example 1-1 | 34.8% | 42.67% | 0.148 | 51.97 | 60.0 | 88.4 | 80.5 | 25.4 |
| Example 1-2 | 32.2% | 42.83% | 0.138 | 34.48 | 53.8 | 89.1 | 81.2 | 23.5 |
| Example 1-3 | 30.0% | 42.95% | 0.129 | 25.77 | 44.2 | 89.5 | 82.3 | 22.7 |
| Example 1-4 | 27.4% | 45.12% | 0.124 | 18.54 | 43.9 | 90.2 | 83.7 | 22.3 |
| Example 1-5 | 27.4% | 50.45% | 0.138 | 34.56 | 41.7 | 89.6 | 82.3 | 23.0 |
| Example 1-6 | 25.0% | 49.68% | 0.124 | 19.73 | 35.0 | 90.8 | 84.4 | 21.1 |
| Example 1-7 | 23.5% | 49.51% | 0.116 | 11.63 | 34.7 | 91.3 | 84.9 | 20.3 |
| Example 1-8 | 21.1% | 49.97% | 0.105 | 8.43 | 34.5 | 91.7 | 85.7 | 19.7 |
| Example 1-9 | 21.1% | 57.28% | 0.121 | 14.50 | 30.2 | 91.1 | 84.8 | 21.9 |
| Example 1-10 | 19.8% | 50.13% | 0.099 | 6.95 | 28.9 | 92.1 | 86.9 | 19.4 |
| Example 1-11 | 17.7% | 53.59% | 0.095 | 6.64 | 24.1 | 92.3 | 87.5 | 18.6 |
| Example 1-12 | 17.7% | 43.26% | 0.077 | 3.83 | 18.4 | 92.8 | 88.7 | 16.9 |
| Example 1-13 | 15.3% | 56.31% | 0.086 | 6.03 | 23.6 | 92.7 | 88.0 | 18.1 |
| Example 1-14 | 13.4% | 57.45% | 0.077 | 5.39 | 19.2 | 92.9 | 88.2 | 17.3 |
| Example 1-15 | 10.8% | 54.80% | 0.059 | 2.96 | 16.5 | 93.1 | 88.8 | 16.4 |
| Example 1-16 | 10.8% | 36.27% | 0.039 | 1.96 | 17.8 | 92.9 | 90.3 | 13.7 |
| Example 1-17 | 10.8% | 64.18% | 0.069 | 3.47 | 10.5 | 93.2 | 87.9 | 17.6 |
| Example 1-18 | 8.6% | 53.59% | 0.046 | 2.30 | 12.9 | 93.3 | 89.7 | 14.8 |
| Example 1-19 | 5.9% | 53.78% | 0.032 | 1.59 | 9.8 | 93.4 | 90.8 | 13.5 |
| Example 1-20 | 3.7% | 54.21% | 0.020 | 1.50 | 7.9 | 93.5 | 91.2 | 13.3 |
| Example 1-21 | 2.5% | 54.14% | 0.014 | 1.35 | 6.3 | 93.8 | 91.5 | 12.9 |
| Example 1-22 | 1.4% | 53.71% | 0.008 | 1.50 | 5.7 | 94.1 | 91.6 | 12.5 |
| Example 1-23 | 0.5% | 55.32% | 0.003 | 1.11 | 4.5 | 94.4 | 92.1 | 12.3 |
| Comparative Example 1-1 | 40.0% | 42.75% | 0.171 | 171.00 | 108.4 | 86.3 | 71.7 | 28.2 |
| Comparative Example 1-2 | 32.2% | 50.74% | 0.163 | 130.71 | 52.1 | 87.0 | 75.9 | 27.7 |
| Comparative Example 1-3 | 27.4% | 68.98% | 0.189 | 378.01 | 21.6 | 87.8 | 68.4 | 35.9 |

As shown in Table 1, a larger value of D_{lack} indicates more silicon-deficient particles. These silicon-deficient particles still retain abundant pore structures, resulting in a high specific surface area. Moreover, with poor mechanical properties, these particles are prone to rupture under compression, further exposing abundant internal pores. This drastically increases side reactions with the electrolyte. Therefore, the first Coulombic efficiency of the pure-material tested in the half-cell is usually low, and the full cell using this anode material exhibits poor high-temperature cycling performance and large cycling expansion.

On the other hand, in addition to the quantity percentage of silicon-deficient particles, the distribution state of silicon inside and on the surface of the porous carbon particles, as well as the distribution uniformity among different particles, also has a significant influence on the performance. When both conditions are satisfied: D_{lack} is at most 35%, preferably at most 30%, more preferably at most 25%, even more preferably at most 20%, and DS is at most 0.15, preferably at most 0.125, more preferably at most 0.1, the presence of a large number of ineffective porous carbon particles can be effectively avoided, the severe enrichment of nano-silicon in some particles can be prevented, and the formation of a elemental silicon layer with a certain thickness on the surface of some particles can also be avoided. Therefore, the distribution uniformity of the nano grains of pure silicon in the anode active material can be effectively improved, the specific surface area and powder resistance of the material can be reduced, and the mechanical strength and compression resistance can be enhanced. The volume change of the silicon material during charge and discharge can be effectively reduced, thereby improving the coulombic efficiency and cycling stability of the material.

### Example 2-1

A process and a raw material similar to those in Example 1-10 were adopted, except that the nitrogen flow rate was adjusted to 14 L/min and the time of silicon deposition was increased by 10 min. The results are shown in Table 2.

### Example 2-2

A process similar to that in Example 2-1 was adopted, except that the raw material with a Dᵥ50 of 7 µm, a Span of 1.3, a specific surface area of 2500 m²/g, an average adsorption pore diameter of 1.2 nm, and a pore volume of 0.68 cm³/g was used. The results are shown in Table 2.

### Example 2-3

A process similar to that in Example 2-1 was adopted, except that the raw material with a Dᵥ50 of 7 µm, a Span of 1.3, a specific surface area of 1580 m²/g, an average adsorption pore diameter of 3.6 nm, and a pore volume of 0.92 cm³/g was used. The results are shown in Table 2.

**Table 2**

| | D_{lack} | Wₜₒₜₐₗ | DS | Powder resistivity/Ω • cm | BET/ m²/g | Pure FCE/% | Capacity retention at 45°C (after cycling) /% | Volume expansion at 45°C (after cycling) /% |
|---|---|---|---|---|---|---|---|---|
| Example 2-1 | 18.5% | 51.13% | 0.095 | 6.34 | 26.8 | 2 nm | 92.3 | 87.1 |
| Example 2-2 | 18.5% | 51.49% | 0.095 | 4.29 | 36.4 | 1.2 nm | 91.6 | 87.8 |
| Example 2-3 | 18.5% | 50.57% | 0.094 | 15.85 | 14.7 | 3.6 nm | 92.9 | 78.5 |

As shown in Table 2, the average adsorption pore size of the porous carbon framework determines the average particle size of nano grains of pure silicon. The average particle size of nano grains of pure silicon are preferably at most 5 nm, more preferably at most 3 nm, so as to achieve more excellent battery performance.

The foregoing are merely exemplary embodiments of the present application and are not intended to limit the present application. Although the present application is described in detail with reference to the foregoing embodiments, those skilled in the art can still modify the technical solutions described in the foregoing embodiments or make equivalent replacements to some of the technical features thereof. Any modification, equivalent replacement, improvement, etc. made within the spirit and principle of the present disclosure shall fall within the scope of the present disclosure.

## Claims

1. An anode active material, comprising anode active material particles, wherein the anode active material particles comprise a porous carbon framework, nano grains of pure silicon, and an amorphous carbon film;
the anode active material particles comprise silicon-deficient particles, a mass content of silicon in the silicon-deficient particles is at most 15%, and a quantity percentage D_{lack} of the silicon-deficient particles in the anode active material particles is at most 35%, preferably at most 30%, more preferably at most 25%, and even more preferably at most 20%;
a product DS of a total silicon mass content Wₜₒₜₐₗ in the anode active material multiplied by the quantity percentage D_{lack} of the silicon-deficient particles is at most 0.15, preferably at most 0.125, and more preferably at most 0.1.

2. The anode active material according to claim 1, wherein the nano grains of pure silicon are deposited in pores of the porous carbon framework and/or on a surface of the porous carbon framework.

3. The anode active material according to claim 1, wherein the amorphous carbon film coats surfaces of the nano grains of pure silicon and/or the porous carbon framework, and/or the amorphous carbon film fills in the pores of the porous carbon framework.

4. The anode active material according to claim 1, wherein a powder resistivity of the anode active material particles is at most 60 Ω•cm, preferably at most 40 Ω•cm, more preferably at most 20 Ω•cm, and even more preferably at most 10 Ω•cm; and/or
a specific surface area of the anode active material particles is at most 60m²/g, preferably at most 35m²/g, more preferably at most 20m²/g, and even more preferably at most 10m²/g.

5. The anode active material according to claim 1, wherein a median particle size of the anode active material particles ranges from 1 µm to 15 µm, preferably 2 µm to 12 µm.

6. The anode active material according to claim 1, wherein the total silicon mass content Wₜₒₜₐₗ in the anode active material ranges from 30wt% to 80wt%, preferably from 35wt% to 65wt%.

7. The anode active material according to claim 1, wherein a median particle size of the nano grains of pure silicon is at most 10 nm, preferably at most 5 nm, and more preferably at most 3 nm.

8. An electrode, comprising the anode active material according to any one of claims 1 to 7.

9. A battery, comprising the electrode according to claim 8.

10. A method for preparing an anode active material, the anode active material comprising anode active material particles, wherein the method comprises:
preparing the anode active material particles, comprising:
providing a porous carbon framework;
depositing nano grains of pure silicon on the porous carbon framework; and
coating an amorphous carbon film on the porous carbon framework with the nano grains of pure silicon deposited thereon;
wherein the anode active material particles comprise silicon-deficient particles, a mass content of silicon in the silicon-deficient particles is at most 15%, and a quantity percentage D_{lack} of the silicon-deficient particles in the anode active material particles is at most 35%, preferably at most 30%, more preferably at most 25%, and even more preferably at most 20%;
a product DS of a total silicon mass content Wₜₒₜₐₗ in the anode active material multiplied by the quantity percentage D_{lack} of the silicon-deficient particles is at most 0.15, preferably at most 0.125, and more preferably at most 0.1.
